# FASCICULE DE BREVET EUROPEEN

(11) **EP 3 563 094 B1**
(45) Date de publication et mention de la délivrance du brevet: **09.02.2022**
(21) Numéro de dépôt: 17823094.2
(22) Date de dépôt: 19.12.2017
(51) Int. Cl.: B01D 51/10, B01D 53/18, F24F 6/00, F24F 3/00, F24F 3/14, F24F 5/00, F24F 8/10, B01J 10/00

(54) **INSTALLATION POUR LA PRODUCTION ET LE TRAITEMENT DE FLUX GAZEUX À TRAVERS UN VOLUME DE LIQUIDE**
VORRICHTUNG ZUR HERSTELLUNG UND BEHANDLUNG VON GASSTRÖMEN DURCH EIN VOLUMEN AUS FLÜSSIGKEIT
DEVICE FOR GAS FLOW PRODUCTION AND TREATMENT THROUGH A LIQUID VOLUME

(30) Priorité: 27.12.2016 FR 1663416
(43) Date de publication de la demande: 06.11.2019
(73) Titulaire: Starklab, 59310 Nomain (FR)
(72) Inventeur: ZEMMOURI, M. Jaouad, 59310 Nomain (FR)
(74) Mandataire: Matkowska, Franck
(86) Numéro de dépôt international: PCT/EP2017/083425
(87) Numéro de publication internationale: WO 2018/122027

(56) Documents cités:
- EP-A1- 2 910 297
- CN-A- 1 074 291
- GB-A- 719 932
- JP-A- 2002 357 333

## Description

### Domaine technique

La présente invention concerne la production et le traitement de flux gazeux à travers un volume de liquide. Elle trouve son application dans des domaines variés tels que par exemple, et de manière non exhaustive, la récupération de calories dans un flux gazeux, et notamment dans un flux d'air chaud ou dans des fumées industrielles, la production d'un flux gazeux qui est chauffé ou refroidi en traversant ledit volume de liquide, la production d'un flux gazeux dont la température est contrôlée et/ou dont l'humidité absolue est contrôlée, l'humidification ou la déshumidification d'un flux gazeux, la dépollution ou le filtrage d'un flux gazeux, le chauffage ou la climatisation d'un local ou de bâtiments industriels, tertiaires, ou domestiques, le contrôle de l'hygrométrie d'un local ou de bâtiments industriels, tertiaires, ou domestiques.

### Art antérieur

L'utilisation d'un liquide, tel que par exemple de l'eau, pour traiter, et notamment pour chauffer ou refroidir un flux gazeux par échange thermique entre le liquide et le flux gazeux, avec une mise en contact direct du flux gazeux et du liquide, est une technique ancienne, qui présente l'avantage d'être écologique, car elle évite notamment la mise en œuvre de fluides caloporteurs de type fluides frigorigènes. Le chauffage ou refroidissement du flux gazeux, et notamment d'un flux d'air peut par exemple avoir pour objectif de produire un flux gazeux ayant une température contrôlée et/ou avoir pour objectif de produire un flux gazeux ayant une humidité absolue contrôlée.

Une première solution connue pour mettre en œuvre cette technique consiste à faire passer le flux gazeux à travers un rideau de fines gouttelettes du liquide ou à travers une surface d'échange perméable au gaz et contenant ce liquide, tel que par exemple un matériau textile imbibé d'eau ou à faire circuler le flux gazeux au contact de plaques humidifiées. Le principal inconvénient de ce type de solution réside dans le très faible rendement énergétique de l'échange thermique entre le liquide et le flux gazeux, et dans les faibles débits d'air pouvant être obtenus.

Une deuxième solution connue consiste à faire passer le flux gazeux, et notamment le flux d'air directement à travers un volume de liquide contenu dans une enceinte d'échange, en injectant le flux d'air dans le volume de liquide, au-dessous de la surface dudit volume de liquide. Ce type de solution est décrit par exemple dans la demande de brevet internationale WO 2006/138287, et dans le brevet américain US 4 697 735 (figure 3). Ce type de solution est également décrit dans la demande de brevet internationale WO2016/071648, qui divulgue la mise en œuvre d'une enceinte d'échange ouverte en partie basse et plongée dans un volume de liquide. Cette deuxième solution technique présente l'avantage de permettre d'atteindre un rendement énergétique des échanges thermiques entre le liquide et le flux gazeux plus élevé que la première solution technique.

Dans cette deuxième solution technique, pour un débit de flux gazeux donné, l'efficacité du transfert thermique entre le flux gazeux et le liquide dépend du volume de liquide traversé par le flux gazeux dans l'enceinte d'échange du dispositif. Il en résulte en pratique que plus le débit de flux gazeux est important, plus la section dans un plan horizontal de cette enceinte doit être importante pour conserver l'efficacité du transfert thermique. Ainsi lorsque l'on met en œuvre par exemple un dispositif du type de celui décrit dans la demande de brevet internationale WO2016/071648 susvisée, si on veut augmenter le débit flux gazeux, on est de ce fait contraint d'augmenter une des dimensions transversales de l'enceinte d'échange, ce qui en pratique conduit à augmenter de manière préjudiciable l'encombrement du dispositif. En outre et surtout, on a pu constater qu'au-delà d'un certain débit de flux gazeux, l'augmentation du volume de liquide dans l'enceinte d'échange ne permettait pas de conserver l'efficacité du transfert thermique entre le flux gazeux et le volume de liquide traversé par le flux gazeux dans l'enceinte d'échange, notamment à cause de la perte d'efficacité des effets de bords par les parois de l'enceinte d'échange. Ce type de dispositif est donc limité en débit de flux gazeux.

Le document JP 2002 357333 A montre une installation selon le préambule de la revendication 1.

### Objectif de l'invention

Un objectif de l'invention est de proposer une nouvelle solution technique simple permettant de produire avec un débit important des flux gazeux traités par passage dans un liquide.

### Résumé de l'invention

L'invention a ainsi pour objet une installation de production et de traitement d'un flux gazeux selon la revendication 1.

Plus particulièrement, mais de manière facultative selon l'invention, l'installation peut comporter les caractéristiques techniques additionnelles et optionnelles ci-après, prises isolément ou en combinaison :
- les ouvertures d'évacuation des conduits d'injection sont toutes positionnées sensiblement à la même profondeur par rapport à la surface du volume initial de liquide contenu dans chaque enceinte d'échange lorsque les moyens aérauliques sont à l'arrêt.
- les volumes initiaux (de liquide dans toutes les enceintes d'échange sont identiques.
- les moyens aérauliques comportent un ventilateur ou compresseur raccordé à toutes les ouvertures d'évacuation des enceintes d'échange ou raccordé à toutes les ouvertures d'admission des conduits d'injection.
- elle comporte une réserve de liquide, et la partie basse de chacun enceinte d'échange comporte au moins une ouverture d'admission de liquide et est plongée dans un même bain de liquide (L) contenu dans ladite réserve, de telle sorte que lorsque les moyens aérauliques sont à l'arrêt, la partie basse de chaque enceinte d'échange contient un volume initial de ce liquide, avec un niveau (Hᵢₙᵢₜᵢₐₗ) de liquide qui est identique dans toutes les enceintes d'échange.

L'invention a également pour objet une utilisation de l'installation susvisée pour produire en parallèle plusieurs flux gazeux qui ont été traités par passage dans un volume de liquide contenu dans chaque enceinte d'échange.

### Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- la figure 1 est une vue isométrique d'une installation conforme à l'invention ;
- La figure 2 est une vue isométrique d'un dispositif de traitement de l'installation de la figure 1,
- La figure 3 est une vue en coupe transversale de l'installation de la figure 1 dans le plan de coupe vertical A-A de la figure 1, lorsque le ventilateur de l'installation ne fonctionne pas,
- La figure 4 est une vue en coupe transversale de l'installation de la figure 1 dans le plan de coupe vertical A-A de la figure 1, lorsque le ventilateur de l'installation fonctionne.
- La figure 5 représente manière schématique une deuxième variante de réalisation d'une installation de l'invention.
- La figure 6 représente de manière schématique une troisième variante de réalisation d'une installation de l'invention.
- La figure 7 est une vue schématique en coupe d'un dispositif de traitement d'une quatrième variante de réalisation d'une installation de l'invention, lorsque les moyens aérauliques de l'installation sont à l'arrêt.
- La figure 8 est une vue schématique en coupe d'un dispositif de traitement de ladite quatrième variante de réalisation d'une installation de l'invention, lorsque les moyens aérauliques de l'installation sont en fonctionnement.
- La figure 9 est une vue schématique en coupe montrant les trois dispositifs de traitement de ladite quatrième variante de réalisation d'une installation de l'invention.
- La figure 10 est une vue schématique en coupe d'un dispositif de traitement d'une cinquième variante de réalisation d'une installation de l'invention, lorsque les moyens aérauliques de l'installation sont à l'arrêt.
- La figure 11 est une vue schématique en coupe d'un dispositif de traitement de ladite cinquième variante de réalisation d'une installation de l'invention, lorsque les moyens aérauliques de l'installation sont en fonctionnement.
- La figure 12 est une vue schématique en coupe montrant les trois dispositifs de traitement de ladite cinquième variante de réalisation d'une installation de l'invention.

### Description détaillée

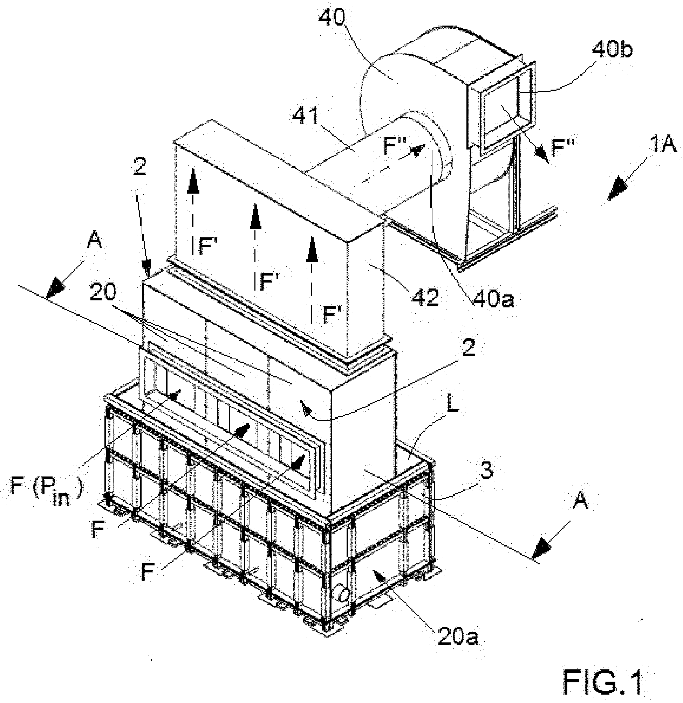

En référence à la variante particulière de réalisation de la figure 1, l'installation 1A de production et de traitement d'un flux gazeux comporte une réserve de liquide constituée par un bac 3 ouvert en partie supérieure et destiné à contenir un bain de liquide L, et par exemple de l'eau, et trois dispositifs de traitement 2, comportant chacun une enceinte d'échange 20.

Pour l'alimentation du bac 3 en liquide, et notamment en eau, l'installation 1A comporte en outre des moyens d'alimentation en liquide (non représentés sur la figure 1) comportant un conduit d'alimentation en liquide qui débouche dans le bac 3, au-dessus du bain de liquide, et qui est équipé d'une vanne d'alimentation permettant de contrôler l'alimentation du bac 3 en liquide.

L'installation 1A comporte en outre des moyens d'évacuation (non représentés sur la figure 1) comportant un conduit d'évacuation qui communique en partie basse avec l'intérieur du bac 3, au-dessous de la surface du bain de liquide contenu dans le bac 3, et qui est équipé d'une vanne d'évacuation permettant de contrôler l'évacuation du liquide en dehors du bac 3.

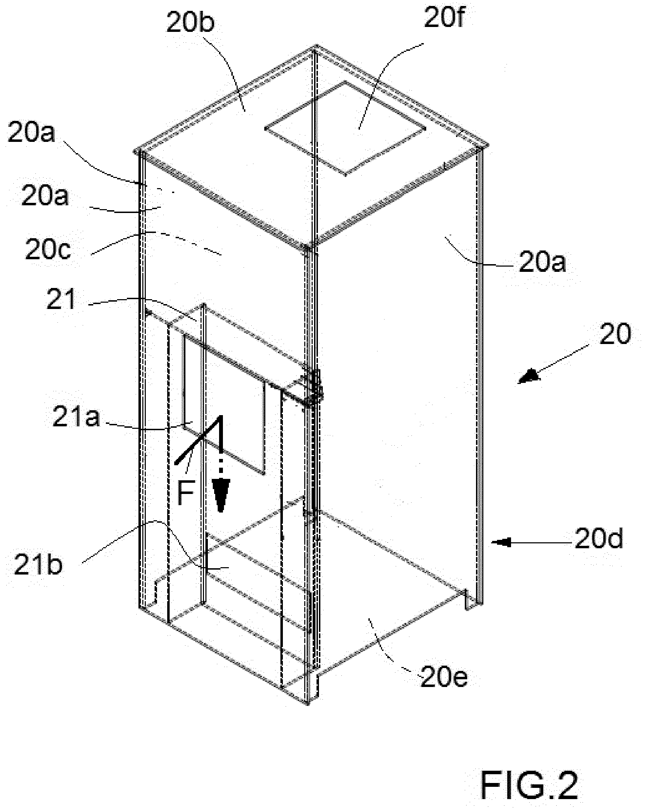

En référence à la figure 2, chaque enceinte d'échange 20 comporte quatre parois latérales 20a, qui sont assemblées avec une paroi supérieure 20b de manière à délimiter une chambre interne 20c, qui dans cet exemple particulier présente une section horizontale quadrangulaire. La géométrie de cette section horizontale est sans importance pour l'invention. Dans une autre variante, cette section horizontale peut être quelconque et par exemple être circulaire ou polygonale.

La face inférieure de la partie basse 20d de chaque enceinte d'échange 20 est ouverte et forme ainsi une ouverture d'admission de liquide 20e. Cette partie basse 20d de chaque enceinte d'échange 20 est positionnée dans le bac 3, par exemple en étant posée sur la paroi de fond du bac 3, de telle sorte qu'en remplissant le bac 3 avec un niveau de liquide suffisant, la partie basse 20d de chaque enceinte d'échange 20 est plongée dans le bain de liquide contenu dans le bac 3, et la partie immergée de chaque enceinte d'échange 20 contient un bain de liquide ayant un volume initial Vᵢₙᵢₜᵢₐₗ.

Dans l'exemple particulier illustré sur les figures, afin de réduire l'encombrement, les enceintes d'échange 20 sont juxtaposées. Dans une autre variante, elles pourraient être espacées.

De préférence tel qu'illustré sur les figures annexées, les enceintes d'échange 20 sont toutes identiques. Dans une autre variante, elles pourraient être différentes.

En référence à la figure 2, chaque enceinte d'échange 20 comporte dans sa paroi supérieure 20b au moins une ouverture d'évacuation 20f d'un flux gazeux. Chaque dispositif 2 comporte au moins un conduit d'injection 21 vertical, à l'intérieur de l'enceinte d'échange 20. Ce conduit d'injection 21 comporte, en partie haute, une ouverture d'admission 21a d'un flux gazeux et en partie basse, une ouverture d'évacuation 21b d'un flux gazeux.

En référence à la figure 1, l'installation 1A comprend en outre des moyens aérauliques 4 comportant un ventilateur 40. L'admission d'air 40a de ce ventilateur 40 est raccordée, au moyen d'une canalisation 41 et d'une hotte 42, à toutes les ouvertures d'évacuation 20f de toutes les enceintes d'échange 20. L'évacuation d'air 40b de ce ventilateur 40 débouche à l'air libre.

Dans une autre variante, l'évacuation d'air 40b du ventilateur 40 peut être raccordée à une canalisation pour être envoyé dans un autre dispositif dans une autre installation.

Dans la variante de réalisation illustrée sur la figure 1, le ventilateur 40 est un ventilateur centrifuge. Dans le cadre de l'invention, les moyens aérauliques 4 peuvent comporter tout type connu de compresseur de gaz, le ventilateur 40 pouvant être également être un ventilateur axial, une pompe, etc....

En outre dans la variante illustrée, il est mis en œuvre un seul ventilateur 40 commun à tous les dispositifs 2. Dans une autre variante, on pourrait mettre en œuvre plusieurs ventilateurs 40 en parallèle et par exemple un ventilateur 40 pour chaque dispositif de traitement 2.

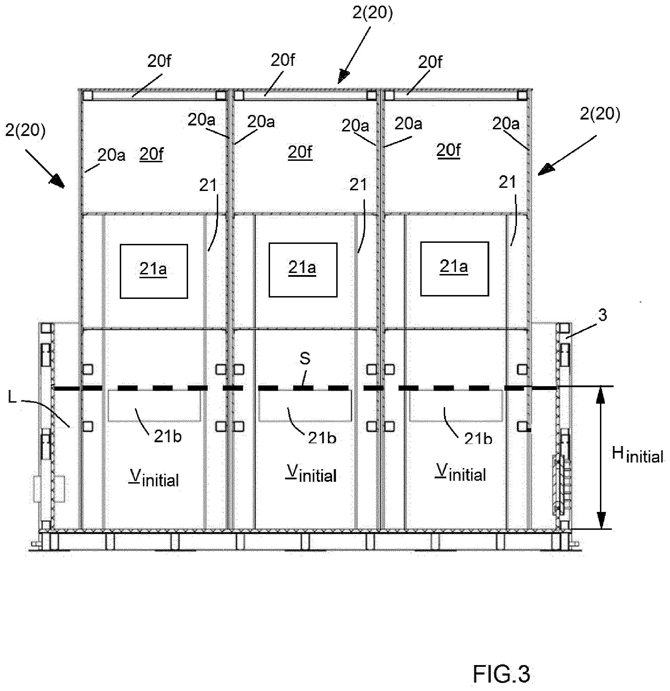

Lorsque les moyens aérauliques 4 sont à l'arrêt, le bac 3 contient un volume initial de liquide L correspondant à un niveau de liquide initial (figure 3 / hauteur de liquide Hᵢₙᵢₜᵢₐₗ) dans le bac 3 à l'extérieur des enceintes d'échange 20 des dispositifs de traitement 2. Les enceintes d'échange 20 étant en communication hydrauliques entre elles via leurs ouverture d'admission de liquide 20e et via le bac 3, la partie basse immergée de chaque enceinte d'échange 20 contient un volume initial Vᵢₙᵢₜᵢₐₗ de liquide, qui est tel que la hauteur initiale Hᵢₙᵢₜᵢₐₗ de liquide dans chaque enceinte d'échange 20 est identique dans toutes les enceintes d'échange 20 et est suffisante au moins pour que l'ouverture d'évacuation 21b du conduit d'injection 21 soit positionnée au-dessous de la surface S de liquide dans l'enceinte d'échange 20.

De préférence, ces volumes initiaux de liquide Vᵢₙᵢₜᵢₐₗ sont également identiques dans toutes les enceintes d'échange 20.

De préférence, tel qu'illustré sur la figure 3, les ouvertures d'évacuation 21b des conduits d'injection 21 sont toutes positionnées à la même profondeur par rapport à la surface S du volume initial Vᵢₙᵢₜᵢₐₗ de liquide contenu dans chaque enceinte d'échange 20 lorsque moyens aérauliques 4 sont à l'arrêt.

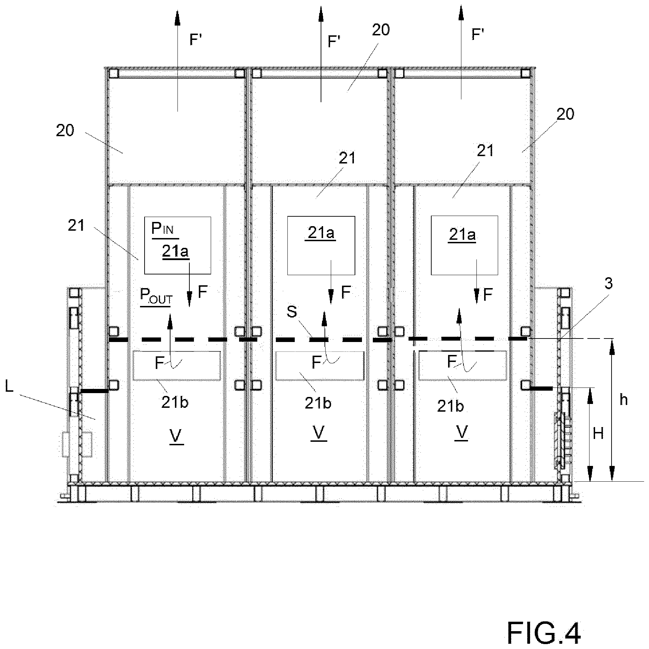

Lorsque l'on fait fonctionner le ventilateur 40, on met en dépression simultanément l'intérieur de chaque enceinte d'échange 20. Lorsque le ventilateur 40 fonctionne, la pression Pin à l'entrée de chaque conduit d'injection 21 est supérieure à la pression Pout au-dessus du volume de liquide dans l'enceinte d'échange 20. Cette différence de pression ΔP (ΔP = Pin - Pout) se traduit dans chaque enceinte d'échange 20 (figure 4) par une remontée du niveau (Figure 4/ hauteur h) du liquide dans chaque enceinte d'échange 20 et une baisse du niveau de liquide (Figure 4/ hauteur H) dans le bac 3 à l'extérieur des enceintes d'échange 20.

Le volume de liquide V et le niveau h de liquide dans chaque enceinte d'échange 20 dépend de cette différence de pression ΔP. Sur la figure 4, on a considéré que les différences de pression ΔP dans chaque enceinte d'échange 20 étaient identiques, ce qui se traduit par des niveaux h de liquide identiques. Dans le cadre de l'invention, les différences de pression ΔP peuvent être différentes, ce qui se traduit dans ce cas par des niveaux h de liquide différents dans les enceintes d'échange 20.

Lorsque le ventilateur 40 fonctionne, il aspire parallèlement et simultanément dans chaque enceinte d'échange 20 un flux gazeux entrant F (figure 1), depuis l'extérieur des enceintes d'échange 20, chaque flux gazeux entrant F pénétrant dans le conduit d'injection 21 de l'enceinte d'échange 20 correspondante par l'ouverture d'admission 21a de ce conduit 21. Dans cette application particulière, les ouvertures d'admission 21a débouchant à l'air libre, chaque flux gazeux F est un flux d'air provenant de l'air dans l'environnement extérieur des enceintes d'échange 20.

Pour chaque enceinte d'échange 20, ce flux gazeux entrant F (non traité) est introduit dans la partie non immergée du conduit d'injection 21, passe à travers l'ouverture d'évacuation 21b de la partie basse immergée du conduit d'injection 21 et est introduit dans ledit volume de liquide V contenu dans la partie basse immergée de l'enceinte, au-dessous de la surface S dudit volume de liquide. Un flux gazeux F' sortant, traité par contact direct avec ledit volume de liquide contenu dans l'enceinte d'échange 20 remonte à l'intérieur de l'enceinte d'échange 20, en dehors du conduit d'injection 21 et est évacué en dehors de ladite enceinte d'échange en passant à travers l'ouverture d'évacuation 20f de l'enceinte.

Ces flux gazeux sortants F' sont aspirés par le ventilateur 40 et évacués sous la forme d'un flux gazeux F" (Figure 1).

Lorsque la température du volume de liquide V dans l'enceinte 20 est différente de la température du flux gazeux F avant son introduction dans le volume V de liquide, il se produit entre le gaz et le liquide des échanges thermiques par chaleur sensible et chaleur latente.

Lorsque la température T_{Liquide} du volume de liquide est inférieure à la température initiale T_{Initiale} du flux de gaz F avant introduction dans le volume de liquide, le flux de gaz F' est refroidi. Plus particulièrement, la température du flux de gaz F' sortant a été diminuée et peut par exemple être sensiblement égale à la température T_{Liquide} du volume de liquide. Il en résulte concomitamment que le flux d'air de gaz F' sortant du dispositif 1 a été déshumidifié par rapport aux flux de gaz entrant F, l'humidité absolue (poids d'eau par volume d'air) dans le flux de gaz F' sortant étant inférieure à l'humidité absolue du flux de gaz F entrant.

A l'inverse, lorsque la température du T_{Liquide} du volume de liquide est supérieure à la température initiale T_{Initiale} , le flux de gaz F' sortant est chauffé et peut par exemple être à une température sensiblement égale à la température T_{Liquide} du volume de liquide. Il en résulte concomitamment que le flux de gaz F' sortant du dispositif 1 a été humidifié par rapport au flux de gaz entrant F, l'humidité absolue (poids d'eau par volume d'air) dans le flux de gaz F' sortant étant supérieure à l'humidité absolue du flux de gaz F entrant.

Dans certaines applications, les dispositifs de traitement 2 peuvent être utilisés pour filtrer ou dépolluer le flux de gaz entrant F par passage à travers un volume de liquide V. Les dispositifs de traitement 2 peuvent également être utilisés pour condenser ou évaporer un ou plusieurs constituants transportés par le flux de gaz entrant F, par passage à travers un volume de liquide V. En fonction de l'application, la température du volume de liquide peut être supérieure ou inférieure à la température du flux de gaz entrant F, ou être sensiblement égale à la température du flux de gaz entrant F. Lorsque la température du volume de liquide est sensiblement égale à la température du flux de gaz entrant F, on produit en sortie du dispositif 1 un flux de gaz sortant F', qui n'a pas été chauffé ou refroidi, mais qui est sensiblement à la même température que le flux de gaz entrant F.

L'invention permet avantageusement de travailler avec un débit en sortie du ventilateur 40 qui peut être important, et par exemple supérieur à 10000m³/h, et plus particulièrement encore dans certaines applications supérieur à 100000m³/h, sans préjudice pour la qualité des flux gazeux traités F'. On peut également facilement augmenter les débits de flux gazeux traités, en augmentant le nombre de dispositif de traitement 2 sans préjudice pour la qualité des flux gazeux traités F'.

Il est important de noter que dans de nombreuses applications, la pression Pin ou la pression Pout peuvent être différentes d'un dispositif de traitement 2 à l'autre et/ou peuvent varier différemment dans le temps d'un dispositif de traitement 2 à l'autre. Il en est de même des débits des flux gazeux F et F'.

Dans l'invention, lorsque les moyens aérauliques 4 sont à l'arrêt, le niveau de liquide Hᵢₙᵢₜᵢₐₗ dans les enceintes d'échange 20 est toujours identique pour tous les dispositifs de traitement 2, ce qui permet avantageusement d'avoir en sortie des enceintes d'échange 20 des flux gazeux sortant F' qui ont sensiblement les mêmes caractéristiques, notamment en ce qui concerne leur température et leur taux d'humidité. Comparativement, si la réserve de liquide L n'était pas commune à tous les dispositifs de traitement, mais que chaque dispositif 2 comportait son propre bac 3 indépendant ne communiquant pas hydrauliquement avec les autres bacs 3, dans ce cas il faudrait mettre en œuvre une régulation extrêmement compliquée et peu fiable pour essayer de maintenir automatiquement le même niveau de liquide Hᵢₙᵢₜᵢₐₗ dans toutes les enceintes 20, en cas de différence de pression Pin ou de différence de pression Pout dans au moins un des dispositifs de traitement 2 par rapport aux autres dispositifs traitement .

L'invention n'est pas limitée à la mise en œuvre d'eau comme liquide L, mais s'étend à tout autre type de liquide. A titre d'exemples non limitatifs et non exhaustifs, il peut être intéressant d'utiliser dans certaines applications un liquide L dont la température de solidification à la pression atmosphérique est inférieure à 0°C, tel que par exemple de l'eau contenant des additifs, de type sels, glucides, glycol, alcool. Il peut également être intéressant d'utiliser de l'huile comme liquide L.

Dans la variante qui a été décrite, le ventilateur 40 permet de créer les flux gazeux F et F' par aspiration. Dans une autre variante, le ventilateur 40 pourrait être raccordé aux ouvertures admission 21a des conduits d'injection 21, de manière à créer ces flux gazeux F et F' par soufflage et non plus par aspiration.

Dans variante de la figure 1, le bac 3 est ouvert en partie supérieure, le volume de liquide à l'extérieur des enceintes d'échange 20 étant à la pression atmosphérique. Dans une autre variante, le bac 3 pourrait être fermé de manière étanche à l'air.

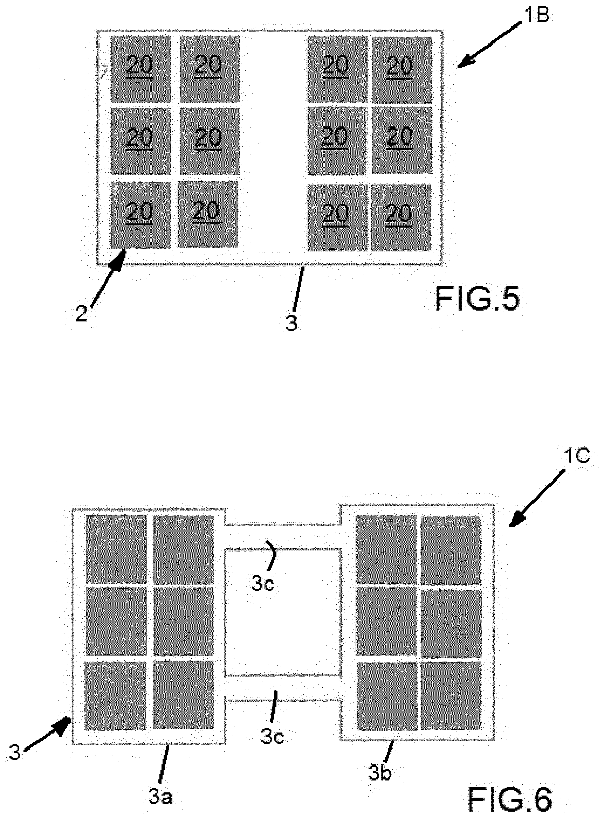

On a représenté de manière schématique sur la figure 5, une autre configuration d'une installation 1B dans laquelle les enceintes d'échange 20 partagent le même bac 3, comme dans la variante de la figure 1, mais ne sont pas accolées.

On a représenté de manière schématique sur la figure 6, une autre configuration d'une installation 1C dans laquelle le bac 3 est en deux parties de bac 3a et 3b, qui communiquent hydrauliquement entre elles au moyen de canalisations 3c, de sorte que, lorsque les moyens aérauliques sont à l'arrêt les deux parties 3a et 3b de bac 3 contiennent un même niveau de liquide correspondant à une hauteur initiale Hᵢₙᵢₜᵢₐₗ de liquide dans chaque enceinte d'échange 20 qui est identique dans toutes les enceintes d'échange 20.

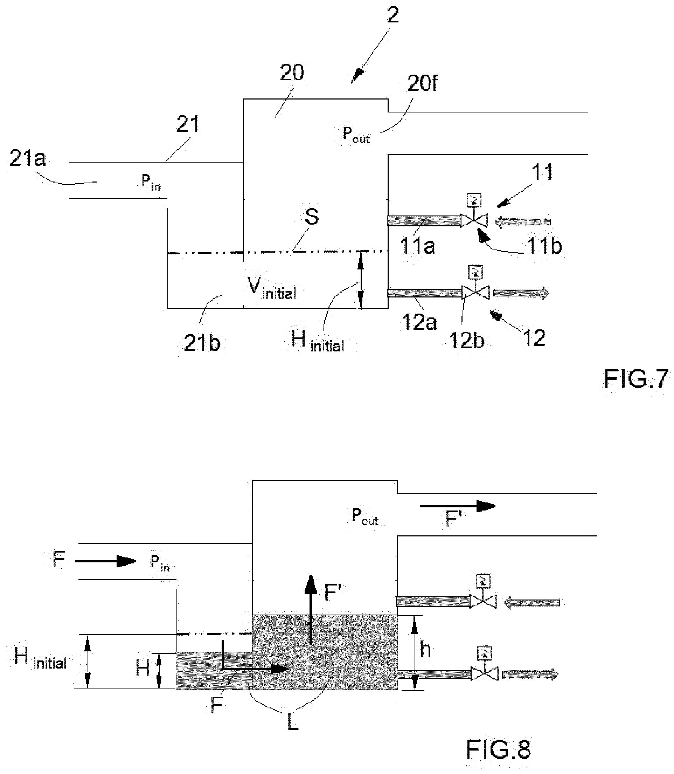

On a représenté sur les figures 7 à 9, une autre variante de réalisation d'une installation 1D conforme à l'invention, qui comporte trois dispositifs de traitement 2, mais qui, à la différence des variantes des figures 1 à 6, est dépourvue de bac 3. Sur ces figures, les moyens aérauliques n'ont pas été représentés, et de manière similaire à ce qui a été précédemment décrit, ces moyens aérauliques comportent un ventilateur ou compresseur dont l'admission d'air est raccordée en parallèle à toutes les ouvertures d'évacuation 20f de toutes les enceintes d'échange 20.

En référence à la figure 7, dans cette variante chaque dispositif de traitement 2 comporte un conduit d'injection 21, qui est externe à l'enceinte d'échange 20. Ce conduit d'injection 21 comporte une ouverture d'admission d'un flux gazeux 21a communicant à l'extérieur des enceintes d'échange 20 de l'installation 1D et une ouverture d'évacuation d'un flux gazeux 21b communicant avec l'intérieur de l'enceinte d'échange 20 du dispositif de traitement 2.

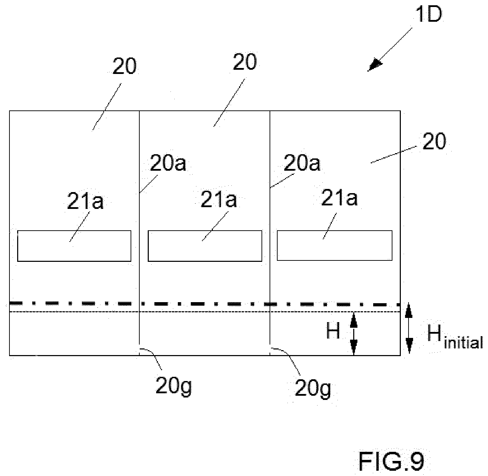

En référence à la figure 9, dans cette variante, les enceintes d'échange 20 sont en communication hydraulique les unes avec les autres au moyen d'ouvertures 20g ménagées dans les parois 20a de séparation entre les enceintes d'échange 20.

Pour l'alimentation des enceintes d'échange 20 en liquide, et notamment en eau, l'installation 1D comporte en outre des moyens d'alimentation en liquide 11 comportant un conduit d'alimentation 11a, qui débouche dans l'une des enceintes 20, et qui est équipé d'une vanne d'alimentation 11b permettant de contrôler l'alimentation des enceintes d'échange 20 en liquide. L'installation 1D comporte en outre des moyens d'évacuation 12 comportant un conduit d'évacuation 12a, qui communique en partie basse avec l'intérieur de l'une des enceintes d'échange 20, au-dessous de la surface du bain de liquide contenu dans les enceintes, et qui équipé d'une vanne d'évacuation 12b permettant de contrôler l'évacuation du liquide en dehors des enceintes d'échange 20.

En référence à la figure 7, lorsque les moyens aérauliques sont à l'arrêt, les enceintes d'échange 20 étant en communication hydrauliques entre elles via les ouvertures 20g, la partie basse de chaque enceinte d'échange 20 contient un volume initial Vᵢₙᵢₜᵢₐₗ de liquide, qui est tel que la hauteur initiale Hᵢₙᵢₜᵢₐₗ de liquide dans chaque enceinte d'échange 20 est identique dans toutes les enceintes d'échange 20 et est suffisante au moins pour que l'ouverture d'évacuation 21b du conduit d'injection 21 soit positionnée au-dessous de la surface S de liquide dans l'enceinte d'échange 20.

Lorsque l'on fait fonctionner les moyens aérauliques, on met en dépression simultanément l'intérieur de chaque enceinte d'échange 20. La pression Pin à l'entrée de chaque conduit d'injection 21 est supérieure à la pression Pout au-dessus du volume de liquide dans l'enceinte d'échange 20. Cette différence de pression ΔP (ΔP = Pin - Pout) se traduit dans chaque enceinte d'échange 20 (figure 8) par une remontée du niveau (Figure 8/ hauteur h) du liquide dans chaque enceinte d'échange 20 et une baisse du niveau de liquide (Figure 8/ hauteur H) dans chaque conduit d'injection 21 à l'extérieur des enceintes d'échange 20.

En fonctionnement, lorsque les différences de pression ΔP dans chaque enceinte d'échange 20 sont identiques, les niveaux h de liquide dans chaque enceinte d'échange 20 sont identiques. En revanche, si en fonctionnement les différences de pression ΔP sont différentes, dans ce cas les niveaux h de liquide dans les enceintes d'échange 20 sont différents.

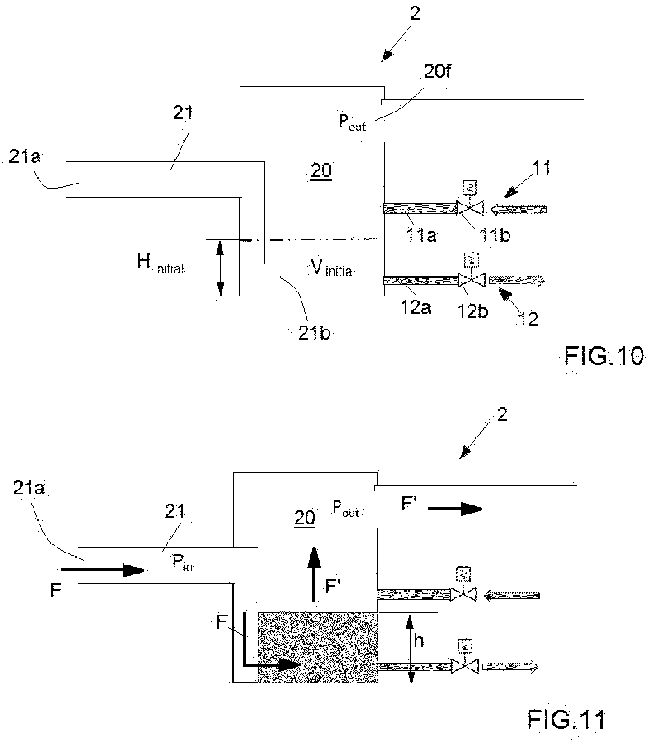

On a représenté sur les figures 10 à 12, une autre variante de réalisation d'une installation 1E conforme à l'invention, qui comporte trois dispositifs de traitement 2. Sur ces figures, les moyens aérauliques n'ont pas été représentés et de manière similaire à ce qui a été précédemment décrit comportent un ventilateur ou compresseur dont l'admission d'air est raccordée en parallèle à toutes les ouvertures d'évacuation 20f de toutes les enceintes d'échange 20.

En référence à la figure 10, dans cette variante chaque dispositif de traitement 2 comporte un conduit d'injection 21, qui en partie est interne à l'enceinte d'échange 20 et qui comporte une ouverture d'admission d'air 21a communicant à l'extérieur des enceintes d'échange 20 de l'installation 1E et une ouverture d'évacuation d'air 21b communicant avec l'intérieur de l'enceinte d'échange 20 du dispositif de traitement 2.

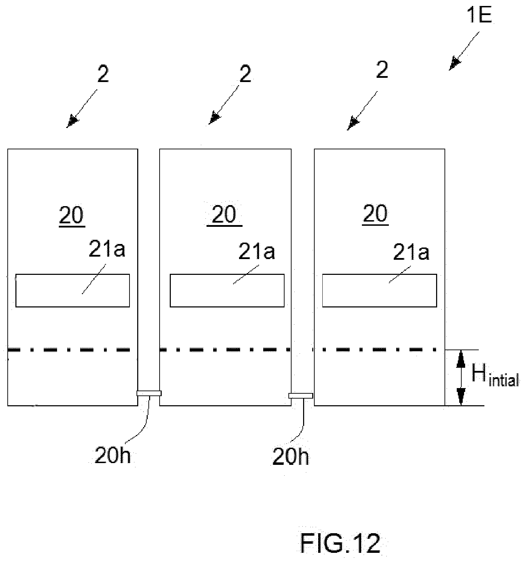

En référence à la figure 12, dans cette variante, les enceintes d'échange 20 sont espacées et sont en communication hydraulique les unes avec les autres au moyen de conduits 20h.

L'installation de l'invention peut être utilisée dans toutes les applications où il est utile de traiter un flux gazeux en le faisant passer dans un volume de liquide. Elle trouve ainsi son application dans des domaines variés tels que par exemple, et de manière non exhaustive, la récupération de calories dans un flux gazeux, et notamment dans un flux d'air chaud ou dans des fumées industrielles, la production d'un flux gazeux qui est chauffé ou refroidi en traversant ledit volume de liquide, la production d'un flux gazeux dont la température est contrôlée et/ou dont l'humidité absolue est contrôlée, l'humidification ou la déshumidification d'un flux gazeux, la dépollution ou le filtrage d'un flux gazeux, le chauffage ou la climatisation d'un local ou de bâtiments industriels, tertiaires, ou domestiques, le contrôle de l'hygrométrie d'un local ou de bâtiments industriels, tertiaires, ou domestiques. Le flux gazeux produit peut également être utilisé pour refroidir, chauffer, humidifier ou déshumidifier tout type d'objet ou de surface.

## Revendications

1. Installation (1A ; 1B ; 1C ; 1D ; 1E) de production et de traitement d'un flux gazeux, ladite installation comportant au moins deux dispositifs de traitement (2) comportant chacun une enceinte d'échange (20) contenant un bain de liquide en partie basse, dans laquelle chaque enceinte d'échange comporte au moins une ouverture d'évacuation (20f) d'un flux gazeux, dans laquelle chaque dispositif de traitement (2) comporte au moins un conduit d'injection (21) ayant au moins une ouverture d'admission (21a) et au moins une ouverture d'évacuation (21b), ladite installation comportant en outre des moyens aérauliques (4), qui sont raccordés à toutes les ouvertures d'évacuation (20f) des enceintes d'échange (20) ou qui sont raccordés à toutes les ouvertures d'admission (21a) des conduits d'injection (21), et qui permettent en fonctionnement de créer, par aspiration ou par soufflage, simultanément et parallèlement pour chaque dispositif de traitement (2), un flux gazeux entrant (F) en provenance de l'extérieur des enceintes d'échange (20), dans laquelle chaque conduit d'injection (21) du dispositif de traitement (2) correspondant est configuré pour l'introduction de chaque flux gazeux entrant (F) correspondant et pour laisser passer ce flux à travers l'ouverture d'évacuation (21b) du conduit d'injection (21), ladite ouverture d'évacuation (21b) du conduit d'injection (21) étant configurée pour introduire ledit flux dans le bain de liquide contenu dans la partie basse de l'enceinte d'échange (20), au-dessous de la surface (S) dudit bain de liquide, et l'enceinte d'échange est configurée pour laisser remonter à l'intérieur de l'enceinte d'échange un flux gazeux (F') sortant, traité par contact direct avec ledit bain de liquide et pour évacuer ledit flux gazeux sortant en dehors de ladite enceinte d'échange (20) en le laissant passer à travers l'ouverture d'évacuation (20f) de l'enceinte d'échange (20), installation **caractérisée en ce que** les enceintes d'échange (20) communiquent hydrauliquement entre elles de telle sorte que lorsque les moyens aérauliques (4) sont à l'arrêt, chaque enceinte d'échange (20) contient en partie basse un volume (Vᵢₙᵢₜᵢₐₗ) de liquide, avec un niveau (Hᵢₙᵢₜᵢₐₗ) de liquide qui est identique dans toutes les enceintes d'échange (2).

2. Installation selon la revendication 1, dans laquelle les ouvertures d'évacuation (21b) des conduits d'injection (21) sont toutes positionnées sensiblement à la même profondeur par rapport à la surface (S) du volume initial (Vᵢₙᵢₜᵢₐₗ) de liquide contenu dans chaque enceinte d'échange (20) lorsque les moyens aérauliques (4) sont à l'arrêt.

3. Installation selon l'une quelconque des revendications précédentes, dans laquelle les volumes initiaux (Vᵢₙᵢₜᵢₐₗ) de liquide dans toutes les enceintes d'échange (20) sont identiques.

4. Installation selon l'une quelconque des revendications précédentes, dans laquelle les moyens aérauliques (4) comportent un ventilateur ou compresseur (40) raccordé à toutes les ouvertures d'évacuation (20f) des enceintes d'échange (20) ou raccordé à toutes les ouvertures d'admission (21a) des conduits d'injection (21).

5. Installation (1A) selon l'une quelconque des revendications précédentes, comportant une réserve (3) de liquide (L), et dans laquelle la partie basse (20d) de chaque enceinte d'échange (20) comporte au moins une ouverture d'admission de liquide (20e) et est plongée dans un même bain de liquide (L) contenu dans ladite réserve (3), de telle sorte que lorsque les moyens aérauliques (4) sont à l'arrêt, la partie basse de chaque enceinte d'échange (20) contient un volume initial (Vᵢₙᵢₜᵢₐₗ) de ce liquide, avec un niveau (Hᵢₙᵢₜᵢₐₗ) de liquide qui est identique dans toutes les enceintes d'échange (20).

6. Utilisation de l'installation visée à l'une quelconque des revendications précédentes pour produire en parallèle plusieurs flux gazeux (F') qui ont été traités par passage dans un volume de liquide contenu dans chaque enceinte d'échange (20).

## Patentansprüche

1. Vorrichtung (1A; 1B; 1C; 1D; 1E) zur Herstellung und Behandlung eines Gasstroms, wobei die Vorrichtung mindestens zwei Behandlungseinrichtungen (2) umfasst, die jeweils einen an einem unteren Abschnitt ein Flüssigkeitsbad enthaltenden Austauschraum (20) aufweisen, wobei jeder Austauschraum mindestens eine Austrittsöffnung(20f) für einen Gasstrom aufweist, wobei jede Behandlungseinrichtung(2) mindestens eine Einspritzleitung (21) mit mindestens einer Eintrittsöffnung (21a) und mindestens einer Austrittsöffnung (21b) umfasst, wobei die Vorrichtung weiterhin lufthydraulische (aeraulische) Mittel (4) umfasst, die mit allen Austrittsöffnungen (20f) der Austauschräume (20) verbunden sind oder die mit allen Eintrittsöffnungen (21a) der Einspritzleitungen (21) verbunden sind, und die es im Betrieb ermöglichen, durch Ansaugen oder durch Einblasen gleichzeitig und parallel für jede Behandlungseinrichtung (2) einen eintretenden Gasstrom (F) zu erzeugen, der von außerhalb der Austauschräume (20) kommt, wobei jede Einspritzleitung (21) der entsprechenden Behandlungseinrichtung (2) zum Einleiten jedes entsprechenden Gasstrom (F) und zum Durchlassen des Stroms durch die Austrittsöffnung (21b) der Einspritzleitung (21) ausgelegt ist, wobei die Austrittsöffnung (21b) der Einspritzleitung (21) zum Einleiten des Stroms in das im unteren Abschnitt des Austauschraums (20) enthaltene Flüssigkeitsbad unter die Oberfläche (S) des Flüssigkeitsbades ausgelegt ist, und der Austauschraum so ausgelegt ist, dass er es einem austretenden Gasstrom (F'), der durch direkten Kontakt mit dem Flüssigkeitsbad behandelt wurde, ermöglicht, innerhalb des Austauschraums aufzusteigen und den austretenden Gasstrom unter Passieren durch die Austrittsöffnung (20f) der Austauschräume (20) außerhalb des Austauschraums (20) abzuführen, wobei die Vorrichtung **dadurch gekennzeichnet ist, dass** die Austauschräume (20) hydraulisch derart miteinander in Verbindung stehen, dass bei Stillstand der lufthydraulischen Mittel (4) jeder Austauschraum (20) in seinem unteren Abschnitt ein Flüssigkeitsvolumen (Vinitiai) mit einem Flüssigkeitsstand (Hᵢₙᵢₜᵢₐₗ) enthält, der in allen Austauschräumen (2) identisch ist.

2. Vorrichtung nach Anspruch 1, wobei die Austrittsöffnungen (21b) der Einspritzleitungen (21) alle im Wesentlichen in der gleichen Tiefe in Bezug auf die Oberfläche (S) des Anfangsvolumens (Vᵢₙᵢₜᵢₐₗ) der in jedem Austauschraum (20) enthaltenen Flüssigkeit positioniert sind, wenn die lufthydraulischen Mittel (4) angehalten sind.

3. Vorrichtung nach einem der vorhergehenden Ansprüche, wobei die Anfangsvolumina (Vᵢₙᵢₜᵢₐₗ) der Flüssigkeit in allen Austauschräumen (20) gleich sind.

4. Vorrichtung nach einem der vorhergehenden Ansprüche, wobei die lufthydraulischen Mittel (4) ein Gebläse oder einen Kompressor (40) umfassen, das/der mit allen Austrittsöffnungen (20f) der Austauschräume (20) verbunden ist oder mit allen Eintrittsöffnungen (21a) der Einspritzleitungen (21) verbunden ist.

5. Vorrichtung (1A) nach einem der vorhergehenden Ansprüche, welche einen Vorrat (3) an Flüssigkeit (L) umfasst, und wobei der untere Abschnitt (20d) jedes Austauschraums (20) mindestens eine Flüssigkeitseinlassöffnung (20e) umfasst und in dasselbe Bad aus Flüssigkeit (L) eingetaucht ist, das in dem genannten Vorrat (3) enthalten ist, so dass, wenn die lufthydraulischen Mittel (4) angehalten sind, der untere Abschnitt jedes Austauschraums (20) ein Anfangsvolumen (Vinitiai) dieser Flüssigkeit enthält, mit einem Flüssigkeitsstand (Hᵢₙᵢₜᵢₐₗ) , der in allen Austauschräumen (20) identisch ist.

6. Verwendung der in einem der vorhergehenden Ansprüche genannten Vorrichtung zur parallelen Erzeugung mehrerer Gasströme (F'), die durch Durchströmen eines in jedem Austauschraum (20) enthaltenen Flüssigkeitsvolumens behandelt wurden.

## Claims

1. Facility (1A; 1B; 1C; 1D; 1E) for producing and treating a gas stream, said facility including at least two treatment devices (2) each including an exchange enclosure (20) containing a liquid bath in its bottom, wherein each exchange enclosure includes at least one opening (20f) for discharging a gas stream, wherein each treatment device (2) includes at least one injection conduit (21) having at least one intake opening (21a) and at least one discharge opening (21b), said facility further including aeraulic means (4), which are connected to all the discharge openings (20f) of the exchange enclosures (20) or which are connected to all the intake openings (21a) of the injection conduits (21), and which, during operation, make it possible to create, by suction or blowing, simultaneously and in parallel for each treatment device (2), an incoming gas stream (F) coming from the outside of the exchange enclosures (20), wherein each injection conduit (21) of the corresponding treatment device (2) is designed to introduce each corresponding incoming gas stream (F) and to allow said stream to pass through the discharge opening (21b) of the injection conduit (21), said discharge opening (21b) of the injection conduit (21) being designed to introduce said stream into the liquid bath contained in the bottom of the exchange enclosure (20), below the surface (S) of said liquid bath, and the exchange enclosure is designed to allow an outgoing gas stream (F'), treated by direct contact with said liquid bath, to rise up inside the exchange enclosure, and to discharge said outgoing gas stream out of said exchange enclosure (20) by allowing it to pass through the discharge opening (20f) of the exchange enclosure (20), **characterized in that** the exchange enclosures (20) communicate hydraulically with one another so that, when the aeraulic means (4) are not operating each exchange enclosure (20) contains, at its bottom, an initial volume (Vᵢₙᵢₜᵢₐₗ) of liquid, with an initial level (Hᵢₙᵢₜᵢₐₗ) of liquid which is identical in all the exchange enclosures (2).

2. Facility according to claim 1, wherein the discharge openings (21b) of the injection conduits (21) are all positioned substantially at the same depth relative to the surface (S) of the initial volume (Vᵢₙᵢₜᵢₐₗ) of liquid contained in each exchange enclosure (20) when the aeraulic means (4) are not operating.

3. Facility according to any one of the preceding claims, wherein the initial volumes (Vᵢₙᵢₜᵢₐₗ) of liquid in all the exchange enclosures (20) are identical.

4. Facility according to any one of the preceding claims, wherein the aeraulic means (4) include a fan or compressor (40) connected to all the discharge openings (20f) of the exchange enclosures (20) or connected to all the intake openings (21a) of the injection conduits (21).

5. Facility (1A) according to any one of the preceding claims, including a supply (3) of liquid (L), and wherein the bottom (20d) of each exchange enclosure (20) includes at least one liquid intake opening (20e) and is submerged in the same liquid bath (L) contained in said supply (3), so that, when the aeraulic means (4) are not operating, the bottom of each exchange enclosure (20) contains an initial volume (Vᵢₙᵢₜᵢₐₗ) of this liquid, with a level (Hᵢₙᵢₜᵢₐₗ) of liquid which is identical in all the exchange enclosures (20).

6. Use of the facility according to any one of the preceding claims for producing multiple gas streams (F') in parallel which have been treated by being passed through a volume of liquid contained in each exchange enclosure (20).
